# EUROPEAN PATENT APPLICATION

(11) **EP 4 285 762 A1**
(43) Date of publication of application: **06.12.2023**
(21) Application number: 22211183.3
(22) Date of filing: 02.12.2022
(51) Int. Cl.: A41D 19/00, B29C 41/14, C08J 5/02, C08L 13/02, C08L 67/02, C08F 236/04, C08F 220/42, C08F 220/04, C08F 220/08

(54) **LATEX COMPOSITION FOR DIP-FORMING, METHOD FOR PREPARING THEREOF AND DIP-FORMED ARTICLE PREPARED THEREFROM**

(30) Priority: 30.05.2022 KR 20220066035; 22.09.2022 KR 20220120033
(71) Applicant: Korea Kumho Petrochemical Co., Ltd., Seoul 04542 (KR)
(72) Inventor: KANG, Eunsoo, 34386 Daedeok-gu, Daejeon (KR); LEE, Ha Jung, 02793 Seongbuk-gu, Seoul (KR); CHOUNG, Sung Hun, 34048 Yuseong-gu, Daejeon (KR)
(74) Representative: Beck & Rössig European Patent Attorneys

(57) **Abstract**

A latex composition for dip-forming, comprises a copolymer latex obtained by polymerizing a monomer mixture of a conjugated diene-based monomer, an ethylenically unsaturated nitrile monomer and an ethylenically unsaturated acid monomer; and a polyester polyol. Further disclosed is a method for preparing a dip-formed article and a dip-formed article prepared therefrom.

## Description

### Technical field

The present specification relates to a latex composition for dip-forming, a method for preparing thereof and a dip-formed article prepared therefrom.

### Background art

Conventionally, natural rubber latex was used as the main raw material of gloves for medical use, agricultural and livestock product processing and industrial use. However, due to proteins in natural rubber latex, glove consumers often suffered from contact allergies when using gloves made from natural rubber latex materials. Thus, there was an attempt to produce gloves from synthetic rubber latex containing no proteins, such as nitrile-based copolymer latex. The nitrile-based copolymer latex gloves have better mechanical strength than natural rubber latex gloves, and thus they are increasingly needed in the medical or food field where users frequently contact sharp objects.

However, during the process of compounding the nitrile-based copolymer latex, crosslinking agents, sulfur and vulcanizing accelerators, are fed as essential ingredients, and thus long-term contact with the gloves may cause allergic reactions to the glove users. Furthermore, existing nitrile-based copolymer latex gloves are not biodegraded and the disposal of glove waste after use causes severe environmental contamination. As such, a social demand is on the rise for biodegradable nitrile-based copolymer latex gloves which do not use sulfur and vulcanizing accelerators, have biodegradability when buried, and also meet the mechanical properties such as tensile strength, elongation and durability required for latex gloves.

### Detailed description of invention

### Technical task

The description of the present specification is to solve the problems of the prior art described above, and it is an object of the present specification to provide a latex composition for dip-forming using a polyester polyol as a crosslinking agent, without sulfur and a vulcanizing accelerator, thereby exhibiting excellent biodegradability.

It is another object of the present specification to provide a latex composition for dip-forming having excellent mechanical properties such as tensile strength, elongation and durability and exhibiting biodegradability, and a dip-formed article prepared therefrom.

### Means for solving technical task

According to an aspect, a latex composition for dip-forming, comprising a copolymer latex obtained by polymerizing a monomer mixture of a conjugated diene-based monomer, an ethylenically unsaturated nitrile monomer and an ethylenically unsaturated acid monomer; and a polyester polyol, is provided.

In an embodiment, the conjugated diene-based monomer may be one selected from the group consisting of 1,3-butadiene, 2,3-dimethyl-1,3-butadiene, 2-ethyl-1,3-butadiene, 1,3-pentadiene, isoprene and combinations of two or more thereof.

In an embodiment, the ethylenically unsaturated nitrile monomer may be one selected from the group consisting of acrylonitrile, methacrylonitrile, fumaronitrile, α-chloronitrile, α-cyanoethylacyrlonitrile and combinations of two or more thereof.

In an embodiment, the ethylenically unsaturated acid monomer may be one selected from the group consisting of methacrylic acid, acrylic acid, itaconic acid, maleic acid, fumaric acid, maleic anhydride, citraconic anhydride, styrenesulfonic acid, monobutyl fumarate, monobutyl maleate, mono-2-hydroxypropyl maleate and combinations of two or more thereof.

In an embodiment, the polyester polyol may be one selected from the group consisting of a reaction product of a phthalic acid-based compound and a glycol-based compound, a reaction product of a phthalic acid-based compound and a triol-based compound, a reaction product of an adipic acid-based compound and a glycol-based compound, a reaction product of an adipic acid-based compound and a triol-based compound and combinations of two or more thereof.

In an embodiment, the content of the conjugated diene-based monomer may be 45 to 80 wt. % based on the total weight of the copolymer latex.

In an embodiment, the content of the ethylenically unsaturated nitrile monomer may be 15 to 45 wt. % based on the total weight of the copolymer latex.

In an embodiment, the content of the ethylenically unsaturated acid monomer may be 1 to 10 wt. % based on the total weight of the copolymer latex.

In an embodiment, the content of the polyester polyol may be 0.1 to 10 parts by weight based on 100 parts by weight of the copolymer latex.

In an embodiment, the acid value of the polyester polyol may be 2.0 or more.

According to another aspect, a method for preparing a dip-formed article, comprising (a) preparing a copolymer latex obtained by polymerizing a monomer mixture of a conjugated diene-based monomer, an ethylenically unsaturated nitrile monomer and an ethylenically unsaturated acid monomer; (b) adding to the copolymer latex a crosslinking composition comprising a polyester polyol; and (c) performing dip-forming, is provided.

According to yet another aspect, a dip-formed article prepared by dip-forming the aforementioned latex composition for dip-forming, is provided.

In an embodiment, the dip-formed article may be one selected from the group consisting of gloves for medical use, gloves for agricultural and livestock product processing and gloves for industrial use.

### Effect of invention

A latex composition for dip-forming according to an aspect of the present specification comprises a polyester polyol, thereby having excellent biodegradability.

A latex composition for dip-forming and a dip-formed article according to another aspect of the present specification have excellent quality and mechanical properties such as tensile strength, elongation and durability and also exhibit biodegradability, and they may be widely used in the manufacture of environmentally friendly gloves for medical use, for agricultural and livestock product processing and for industrial use.

The effects of an aspect of the present specification are not limited to the above-mentioned effects, and it should be understood that the effects of the present specification include all effects that could be inferred from the configuration of the invention described in the detailed description of the invention or the appended claims.

### Best mode for carrying out the invention

Hereinafter, an aspect of the present specification will be described. The description of the present specification, however, may be implemented in various different forms, and thus is not limited to the embodiments described herein. Also, in order to clearly explain an aspect of the present specification, portions that are not related to the explanation are omitted.

Throughout the specification, it should be understood that when a portion is referred to as being "connected" to another portion, it can be "directly connected to" the other portion, or "indirectly connected to" the other portion having intervening portions present. Also, when a component "includes" an element, unless there is another opposite description thereto, it should be understood that the component does not exclude another element but may further include another element.

When a range of numerical values is described herein, the value has the precision of the significant figures provided according to the standard rules in chemistry for significant figures, unless a specific range thereof is stated otherwise. For example, 10 includes a range of 5.0 to 14.9 and the number 10.0 includes a range of 9.50 to 10.49.

### Latex composition for dip-forming

The latex composition for dip-forming according to an aspect may comprise a copolymer latex obtained by polymerizing a monomer mixture of a conjugated diene-based monomer, an ethylenically unsaturated nitrile monomer and an ethylenically unsaturated acid monomer; and a polyester polyol.

A formed article prepared by dip-forming the latex composition for dip-forming may comprise a crosslinking structure derived from a polyester polyol. The crosslinking structure by a polyester polyol may impart excellent biodegradability to the dip-formed article and also provide mechanical properties at a similar level to conventional vulcanized formed articles.

The characteristics of the copolymer latex and the physical properties of the dip-formed article may be adjusted according to the composition of the monomer mixture.

The conjugated diene-based monomer may be one selected from the group consisting of 1,3-butadiene, 2,3-dimethyl-1,3-butadiene, 2-ethyl-1,3-butadiene, 1,3-pentadiene, isoprene and combinations of two or more thereof, but is not limited thereto.

The ethylenically unsaturated nitrile monomer may be one selected from the group consisting of acrylonitrile, methacrylonitrile, fumaronitrile, α-chloronitrile, α-cyanoethylacyrlonitrile and combinations of two or more thereof, but is not limited thereto.

The ethylenically unsaturated acid monomer may be one selected from the group consisting of methacrylic acid, acrylic acid, itaconic acid, maleic acid, fumaric acid, maleic anhydride, citraconic anhydride, styrenesulfonic acid, monobutyl fumarate, monobutyl maleate, mono-2-hydroxypropyl maleate and combinations of two or more thereof, but is not limited thereto.

The polyester polyol may be prepared by polymerizing a carboxylic acid-based compound and a compound comprising two or more alcohol groups. The polyester polyol is used as a crosslinking agent to replace sulfur, thereby avoiding the user's exposure to carcinogens and preventing allergic reactions, and providing a dip-formed article having mechanical properties equal to or greater than those of conventional dip-formed articles and also having excellent fit. The polyester polyol may react with the carboxyl group of the copolymer latex to form a crosslinking structure.

As an unlimited example of the present specification, the polyester polyol may be one selected from the group consisting of a reaction product of a phthalic acid-based compound and a glycol-based compound, a reaction product of a phthalic acid-based compound and a triol-based compound, a reaction product of an adipic acid-based compound and a glycol-based compound, a reaction product of an adipic acid-based compound and a triol-based compound and combinations of two or more thereof, but is not limited thereto.

Examples of the phthalic acid-based compound may include, but are not limited to, phthalic acid, phthalic anhydride, methylphthalic acid, isophthalic acid, isophthalic anhydride, 2-methyl isophthalic acid, 4-methyl isophthalic acid, 5-methyl isophthalic acid, terephthalic acid, terephthalic anhydride, dimethyl terephthalate and halides thereof.

Examples of the adipic acid-based compound may include, but are not limited to, adipic acid, adipic anhydride, ethylene adipate, propylene adipate, butylene adipate, 1,6-hexane adipate, diethylene adipate and halides thereof.

Examples of the glycol-based compound may include, but are not limited to, 1,2-ethandiol (ethylene glycol), polyethylene glycol, 1,2-propanediol, 1,3-propanediol (propylene glycol), polypropylene glycol, 1,2-butanediol, 1,3-butanediol, 1,4-butanediol, 1,5-pentanediol, 1,6-hexanediol, 1,8-octanediol, 1,10-decanediol, 1,4-cyclohexanediol, 1,2-diphenol, 1,3-diphenol, 1,4-diphenol, neopentyl glycol, catechol, cyclohexenediol, 1,4-cyclohexanedimethanol, dipropylene glycol, diethylene glycol, tripropylene glycol, triethylene glycol, tetraethylene glycol, and the like.

Examples of the triol-based compound may include, but are not limited to, glycerol, benzenetriol, 1,2,4-butanetriol, 1,2,6-hexanetriol, tris(methylalcohol)propane, tris(methylalcohol)ethane, tris(methylalcohol)nitropropane, trimethylolpropane, polypropylene oxide triol, polyester triol and the like.

The weight average molecular weight of the polyester polyol may be 500 to 2,500 g/mol, for example, 500 g/mol, 750 g/mol, 1,000 g/mol, 1,250 g/mol, 1,500 g/mol, 1,750 g/mol, 2,000 g/mol, 2,250 g/mol, 2,500 g/mol or a range between any two of these values, but is not limited thereto. The acid value of the polyester polyol may be 5.0 or less, for example, 5.0, 4.5, 4.0 or less, but is not limited thereto. For example, when the acid value of the polyester polyol is 5.0 or less, it would be advantage to achieve the biodegradability of the dip-formed article. In addition, the acid value of the polyester polyol may be 2.0 or more, for example, 2.0, 2.5, 3.0, 3.5 or more, but is not limited thereto. For example, when the acid value of the polyester polyol is 2.0 or more, the durability of the dip-formed article may be improved. The OH value of the polyester polyol may be 25 to 500, for example, 25, 50, 75, 100, 125, 150, 175, 200, 225, 250, 275, 300, 325, 350, 375, 400, 425, 450, 475, 500 or a range between any two of these values, but is not limited thereto.

As an unlimited example of the present specification, the content of the conjugated diene-based monomer may be 45 to 80 wt. % based on the total weight of the copolymer latex, for example, 45 wt. %, 47.5 wt. %, 50 wt. %, 52.5 wt. %, 55 wt. %, 57.5 wt. %, 60 wt. %, 62.5 wt. %, 65 wt. %, 67.5 wt. %, 70 wt. %, 72.5 wt. %, 75 wt. %, 77.5 wt. %, 80 wt. % or a range between any two of these values. When the content meets the above range, the curing of the dip-formed article may be inhibited, thereby providing excellent fit.

As an unlimited example of the present specification, the content of the ethylenically unsaturated nitrile monomer may be 15 to 45 wt. % based on the total weight of the copolymer latex, for example, 15 wt. %, 17.5 wt. %, 20 wt. %, 22.5 wt. %, 25 wt. %, 27.5 wt. %, 30 wt. %, 32.5 wt. %, 35 wt. %, 37.5 wt. %, 40 wt. %, 42.5 wt. %, 45 wt. % or a range between any two of these values. When the content meets the above range, the dip-formed article may have excellent durability and tensile strength.

As an unlimited example of the present specification, the content of the ethylenically unsaturated acid monomer may be 1 to 10 wt. % based on the total weight of the copolymer latex, for example, 1 wt. %, 2 wt. %, 3 wt. %, 4 wt. %, 5 wt. %, 6 wt. %, 7 wt. %, 8 wt. %, 9 wt. %, 10 wt. % or a range between any two of these values. When the content meets the above range, the crosslinking structure of the dip-formed article is sufficiently formed, resulting in excellent mechanical properties.

As an unlimited example of the present specification, the copolymer latex may be represented by the following formula 1:

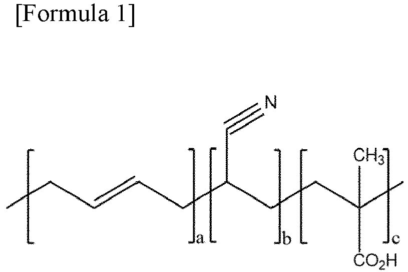

The formula 1 is an example of the three component units of the copolymer latex, which are a conjugated diene-based monomer unit, an ethylenically unsaturated nitrile monomer unit and an ethylenically unsaturated acid monomer unit, but the copolymer is not limited thereto. In addition, the formula 1 illustrates the three component units in order for convenience's sake. In the copolymer, the three component units may be mixed in different order from that shown in the formula 1 and randomly distributed, or at least a portion thereof may be distributed in a block unit according to the user's need.

The content of the polyester polyol may be 0.1 to 10 parts by weight based on 100 parts by weight of the monomer mixture, for example, 0.1 parts by weight, 0.5 parts by weight, 1 part by weight, 1.5 parts by weight, 2 parts by weight, 2.5 parts by weight, 3 parts by weight, 3.5 parts by weight, 4 parts by weight, 4.5 parts by weight, 5 parts by weight, 5.5 parts by weight, 6 parts by weight, 6.5 parts by weight, 7 parts by weight, 7.5 parts by weight, 8 parts by weight, 8.5 parts by weight, 9 parts by weight, 9.5 parts by weight, 10 parts by weight or a range between any two of these values. When the content meets the above range, the dip-formed article may have sufficient mechanical properties and also have biodegradability.

The weight ratio of the structure derived from the ethylenically unsaturated acid monomer and the polyester polyol in the copolymer latex may be 1:0.15 to 0.75, but is not limited thereto. For example, relative to 1 part by weight of the ethylenically unsaturated acid monomer, the polyester polyol may be comprised in an amount of 0.15 parts by weight, 0.2 parts by weight, 0.25 parts by weight, 0.3 parts by weight, 0.35 parts by weight, 0.4 parts by weight, 0.45 parts by weight, 0.5 parts by weight, 0.55 parts by weight, 0.6 parts by weight, 0.65 parts by weight, 0.7 parts by weight, 0.75 parts by weight or a range between any two of these values, but is not limited thereto. When the weight ratio meets the above range, the dip-formed article may have more excellent mechanical strength.

### Method for preparing dip-formed article

According to another aspect, a method for preparing a dip-formed article, comprising (a) preparing a copolymer latex obtained by polymerizing a monomer mixture of a conjugated diene-based monomer, an ethylenically unsaturated nitrile monomer and an ethylenically unsaturated acid monomer; (b) adding to the copolymer latex a crosslinking composition comprising a polyester polyol; and (c) performing dip-forming, is provided.

In step (a), for the copolymer latex, a pre-prepared copolymer latex may be used or a copolymer latex may be prepared by polymerization.

When a copolymer latex is prepared by polymerization, the copolymer latex may be polymerized from a monomer mixture satisfying the above-described conditions. An emulsifier and an inorganic solvent may be fed to the monomer mixture for an emulsion polymerization, and a polymerization initiator may be fed thereto to perform the emulsion polymerization.

The emulsifier may be, but is not limited to, an ionic surfactant. For example, the emulsifier may be one selected from the group consisting of anionic surfactants, cationic surfactants, amphoteric surfactants and combinations of two or more thereof.

The emulsifier may be one selected from the group consisting of alkylbenzene sulfonates, alkyldiphenyloxide disulfonates, aliphatic sulfonates, sulfate esters of higher alcohols, α-olefin sulfonates, alkyl ether sulfate esters and combinations of two or more thereof. Examples of the emulsifier may include, but are not limited to, sodium dodecylbenzene sulfonates and disodium alkyl diphenyloxide sulfonates. The use of an emulsifier comprising the sodium dodecylbenzene sulfonates and disodium alkyl diphenyloxide sulfonates may prevent coagulation of the monomer mixture, increase polymerization conversion, and improve the mechanical stability, chemical stability and polymerization stability of the latex composition. The content of the emulsifier may be 0.1 to 5 parts by weight based on 100 parts by weight of the monomer mixture.

The inorganic solvent may be, but is not limited to, water, for example, ion exchanged water.

A molecular weight regulator may be selectively further added to the monomer mixture when polymerizing the copolymer latex. The molecular weight regulator may be one selected from the group consisting of α-methylstyrene dimers; mercaptans such as t-dodecyl mercaptan, n-dodecyl mercaptan and octyl mercaptan; halogenated hydrocarbons such as carbon tetrachloride, methylene chloride and methylene bromide; and sulfur-containing compounds such as tetraethylthiuram disulfide, dipentamethylenethiuram disulfide, diisopropyl xanthogen disulfide; and combinations of two or more thereof, and, for example, may be t-dodecyl mercaptan, but is not limited thereto. When further adding the molecular weight regulator, the content thereof may be 0.1 to 1.0 parts by weight based on 100 parts by weight of the monomer mixture.

The emulsion polymerization may be performed by comprising feeding a polymerization initiator to initiate a reaction; feeding a polymerization stopping agent to stop the polymerization; and removing unreacted monomers and adjusting a solid content concentration and a pH to obtain a copolymer latex.

The polymerization initiator may be one selected from the group consisting of inorganic peroxides such as sodium persulfate, potassium persulfate, ammonium persulfate, potassium perphosphate and hydrogen peroxide; organic peroxides such as t-butyl peroxide, cumene hydroperoxide, p-menthane hydroperoxide, di-t-butyl peroxide, t-butylcumyl peroxide, acetyl peroxide, isobutyl peroxide, octanoyl peroxide, dibenzoyl peroxide, 3,5,5-trimethylhexanol peroxide and t-butylperoxy isobutyrate; azobisisobutyronitrile; azobis-2,4-dimethylvaleronitrile; azobiscyclohexane carbonitrile; azobisisobutyric acid methyl; and combinations of two or more thereof, but is not limited thereto. The content of the polymerization initiator may be 0.02 to 1.5 parts by weight based on 100 parts by weight of the monomer mixture.

The emulsion polymerization may be performed by further comprising an activator. The activator may be one selected from the group consisting of sodium formaldehyde sulfoxylate, sodium ethylenediaminetetraacetate, ferrous sulfate, dextrose, sodium pyrophosphate, sodium sulfite and combinations of two or more thereof, but is not limited thereto. When further adding the activator, the content thereof may be 0.01 to 0.3 parts by weight based on 100 parts by weight of the monomer mixture.

The emulsion polymerization may be performed at 10 to 90°C, for example, 10°C, 15°C, 20°C, 25°C, 30°C, 35°C, 40°C, 45°C, 50°C, 55°C, 60°C, 65°C, 70°C, 75°C, 80°C, 85°C, 90°C or a temperature between any two of these values, but is not limited thereto.

The polymerization stopping agent may be fed when the conversion of the polymerization is 90% or more. For example, the polymerization stopping agent may be added when the conversion of the polymerization is 90%, 91%, 92%, 93%, 94%, 95%, 96%, 97%, 98%, 99%, 99.9% or a range between any two of these values, but is not limited thereto.

Examples of the polymerization stopping agent may be one selected from the group consisting of hydroxylamine, hydroxylamine sulfate, diethyl hydroxylamine, hydroxylamine sulfonic acids and alkali metal ions thereof, sodium dimethyldithiocarbamate, hydroquinone derivatives, aromatic hydroxy dithiocarboxylic acids such as hydroxy diethyl benzene dithiocarboxylic acid and hydroxy dibutyl benzene dithiocarboxylic acid and combinations of two or more thereof, but are not limited thereto. The content of the polymerization stopping agent may be 0.02 to 1.5 parts by weight based on 100 parts by weight of the monomer mixture.

After polymerization of the copolymer latex, additives such as pH adjusters, antioxidants and antifoaming agents may be added to achieve a suitable solid content concentration and pH.

The pH adjuster may be, but is not limited to, an aqueous potassium hydroxide solution or ammonia water.

The copolymer latex may have a solid content concentration of 30 to 60 wt. %, for example, 30 wt. %, 32 wt. %, 34 wt. %, 36 wt. %, 38 wt. %, 40 wt. %, 42 wt. %, 44 wt. %, 46 wt. %, 48 wt. %, 50 wt. %, 52 wt. %, 54 wt. %, 56 wt. %, 58 wt. %, 60 wt. % or a range between any two of these values, and have a pH adjusted to 7 to 12, for example, 7.0, 7.5, 8.0, 8.5, 9.0, 9.5, 10.0, 10.5, 11.0, 11.5, 12.0 or a range between any two of these values, but is not limited thereto.

The copolymer latex has excellent mechanical stability, biodegradability and polymerization stability, thereby being used in preparation of an environmentally friendly and stable latex composition for dip-forming.

Step (b) may be a step of adding to the copolymer latex a crosslinking composition comprising a crosslinking agent to prepare a latex composition for dip-forming.

Conventional dip compositions may form a crosslinking structure by adding a vulcanizing agent such as sulfur, zinc oxide (ZnO) and titanium oxide (TiO₂) and a vulcanizing accelerator, followed by vulcanization. For typical vulcanizing accelerators, carbamate compounds may be used. However, the carbamate compounds are crosslinked at a high temperature of 120°C or higher. Furthermore, after the crosslinking, carcinogens such as N-nitrosamine may be produced, and the use of carbamate compounds may cause type IV allergy (delayed-type hypersensitivity) and induce symptoms such as contact dermatitis.

In contrast, the above-described latex composition for dip-forming may use a polyester polyol as a crosslinking agent, in place of sulfur (S). The use of a polyol compound as a crosslinking agent may prevent production of carcinogens such as N-nitrosamine and also prevent type IV allergy symptoms (e.g., contact dermatitis) occurring when using carbamate compounds.

Also, a crosslinking composition comprising the polyester polyol may impart biodegradability to a dip-formed article, and thus a dip-formed article that is environmentally friendly may be prepared.

The crosslinking composition may further comprise, in addition to the polyester polyol, at least one of zinc oxide, titanium dioxide, antioxidants, dispersants, pH adjusters, preservatives, emulsifiers, polymerization initiators, molecular weight regulators and chelating agents, according to need, but is not limited thereto.

For example, the crosslinking composition may further comprise zinc oxide in addition to the polyester polyol. A composition for dip-forming comprising zinc oxide together with the polyol compound may improve anti-aging effects. For example, when further comprising an antioxidant in the composition for dip-forming, a dip-formed article comprising both a polyol compound and zinc oxide may have better aging resistance than a dip-formed article prepared by comprising only a polyol compound.

When the crosslinking composition comprises zinc oxide, the content thereof may be 1.0 to 1.8 parts by weight based on 100 parts by weight of the copolymer latex. For example, the content may be 1.0 part by weight, 1.1 parts by weight, 1.2 parts by weight, 1.3 parts by weight, 1.4 parts by weight, 1.5 parts by weight, 1.6 parts by weight, 1.7 parts by weight, 1.8 parts by weight or a range between any two of these values. When the content meets the above range, the crosslinking composition may have tensile strength suitable for a dip-formed article.

When the crosslinking composition comprises zinc oxide, the content thereof may be 0.5 to 1.5 parts by weight based on 100 parts by weight of the copolymer latex. For example, the content may be 0.5 parts by weight, 0.6 parts by weight, 0.7 parts by weight, 0.8 parts by weight, 0.9 parts by weight, 1.0 part by weight, 1.1 parts by weight, 1.2 parts by weight, 1.3 parts by weight, 1.4 parts by weight, 1.5 parts by weight or a range between any two of these values.

Additives such as pH adjusters, antioxidants and antifoaming agents may be added to the latex composition for dip-forming, to achieve a suitable solid content concentration and pH.

The latex composition for dip-forming may have a solid content concentration of 15 to 25 wt. %, for example, 15 wt. %, 16 wt. %, 17 wt. %, 18 wt. %, 19 wt. %, 20 wt. %, 21 wt. %, 22 wt. %, 23 wt. %, 24 wt. %, 25 wt. % or a range between any two of these values, and have a pH adjusted to 8 to 12, for example, 8.0, 8.5, 9.0, 9.5, 10.0, 10.5, 11.0, 11.5, 12.0 or a range between any two of these values, but is not limited thereto.

Step (c) may be a step of preparing a dip-formed article using the latex composition for dip-forming.

A method for preparing a dip-formed article may comprise preparing a coagulation solution; applying the coagulation solution to a mold, followed by drying; dipping the mold to which the coagulation solution is applied in a latex composition for dip-forming to form a dip-formed article; curing the dip-formed article; and separating the cross-linked dip-formed article from the mold, to obtain a dip-formed article. Here, for a latex composition for dip-forming, the above-described composition may be used.

Any typical coagulation solution may be used as the coagulation solution, and may include, for example, calcium nitrate (Ca(NO₃)₂). The coagulation solution may further comprise additives such as wetting agents (e.g., Teric 320). A method of applying a coagulation solution to a mold may include, for example, a method of dipping a mold in a coagulation solution.

Examples of a dip-forming method for obtaining a dip-formed article may include, but are not limited to, direct dipping, anode coagulation dipping or Teague's coagulation dipping.

### Dip-formed article

A dip-formed article according to another aspect of the present specification may be prepared by dip-forming the latex composition for dip-forming.

The dip-formed article has excellent mechanical properties such as tensile strength, elongation and durability, low defect rate and excellent quality in terms of tactility, etc., and thus may be applied to dip-formed articles in various fields.

The dip-formed article has excellent biodegradability, and thus may be applied to environmentally friendly dip-formed articles in various fields, which are biodegradable after use.

The dip-formed article may be one selected from the group consisting of gloves for medical use, gloves for agricultural and livestock product processing and gloves for industrial use, but is not limited thereto.

Hereinafter, examples of the present specification will be described in more detail. However, the following experimental results describe only representative experimental results among the examples and the scope and content of the present specification may not be construed as narrowed or limited by the examples. Each effect of the various embodiments of the present specification not explicitly presented below will be specifically described in the corresponding section.

### Preparation Example

A 10 L high-pressure reactor equipped with a stirrer, thermometer, cooler and nitrogen gas inlet was prepared to continuously feed each ingredient, such as monomers, emulsifiers, polymerization initiators, etc. After the reactor was substituted with nitrogen, a monomer mixture of 65 wt. % of 1,3-butadiene, 30 wt. % of acrylonitrile and 5 wt. % of methacrylic acid, based on the total weight of the mixture, was fed to the reactor. Then, based on 100 parts by weight of the monomer mixture, 2 parts by weight of alkylbenzene sulfonic acid, 1 part by weight of sodium alkyldiphenyloxide disulfonate, 0.5 parts by weight of t-dodecyl mercaptan and 120 parts by weight of ion exchanged water were fed thereto. After elevating the temperature of the reactor to about 25°C, 0.3 parts by weight of potassium persulfate was fed thereto.

When the conversion reaches about 95%, 0.1 parts by weight of sodium dimethyldithiocarbamate was fed thereto to stop polymerization. Thereafter, unreacted monomers were removed by a deodorization process, and ammonia water, an antioxidant, an antifoaming agent, etc., were added thereto, to obtain a carboxylic acid-modified nitrile-based copolymer latex having a sold content concentration of 45 wt. % and a pH of 8.5.

### Comparative Example 1

Based on 100 parts by weight of the latex of Preparation Example, 1.0 part by weight of sulfur, 0.6 parts by weight of zinc dibutyldithiocarbamate (ZDBC), 1.4 parts by weight of zinc oxide and 1.0 part by weight of TiO₂ were added. A 4 wt. % aqueous potassium hydroxide solution and double distilled water were further added thereto, to obtain a latex composition for dip-forming having a sold content concentration of 18 wt. % and a pH of 10.0.

### Example 1

Based on 100 parts by weight of the latex of Preparation Example, 0.5 to 10 parts by weight of a first polyester polyol, 1.4 parts by weight of zinc oxide and 1.0 part by weight of TiO₂ were added. A 4 wt. % aqueous potassium hydroxide solution and double distilled water were further added thereto, to obtain a latex composition for dip-forming having a sold content concentration of 18 wt. % and a pH of 10.0.
- First polyester polyol: phthalic anhydride diethylene glycol having an OH value of 65, an acid value of 1.0 and a weight average molecular weight of 1,000

### Example 2

Based on 100 parts by weight of the latex of Preparation Example, 0.5 to 10 parts by weight of a second polyester polyol, 1.4 parts by weight of zinc oxide and 1.0 part by weight of TiO₂ were added. A 4 wt. % aqueous potassium hydroxide solution and double distilled water were further added thereto, to obtain a latex composition for dip-forming having a sold content concentration of 18 wt. % and a pH of 10.0.
- Second polyester polyol: phthalic anhydride diethylene glycol having an OH value of 315, an acid value of 4.0 and a weight average molecular weight of 2,000

### Example 3

Based on 100 parts by weight of the latex of Preparation Example, 0.5 to 10 parts by weight of a third polyester polyol, 1.4 parts by weight of zinc oxide and 1.0 part by weight of TiO₂ were added. A 4 wt. % aqueous potassium hydroxide solution and double distilled water were further added thereto, to obtain a latex composition for dip-forming having a sold content concentration of 18 wt. % and a pH of 10.0.
- Third polyester polyol: polypropylene glycol adipate having an acid value of 0.3 or less and a weight average molecular weight of 1,850 to 2,150

### Example 4

Based on 100 parts by weight of the latex of Preparation Example, 1 part by weight of a fourth polyester polyol, 1.4 parts by weight of zinc oxide and 1.0 part by weight of TiO₂ were added. A 4 wt. % aqueous potassium hydroxide solution and double distilled water were further added thereto, to obtain a latex composition for dip-forming having a sold content concentration of 18 wt. % and a pH of 10.0.
- Fourth polyester polyol: polydiethylene glycol adipate having an acid value of 0.5 or less and a weight average molecular weight of 1,850 to 2,150

### Experimental Example 1: Evaluation of Mechanical Properties

The latex compositions for dip-forming prepared in Comparative Example 1 and Examples 1 to 4 were formed into specimens having a dumbbell shape according to ASTM D-412. The specimens were stretched at a tensile speed of 500 mm/min using a universal testing machine (UTM) to measure 300% modulus, and tensile strength and elongation at break. Then, the mechanical properties were evaluated. Generally, as latex formed articles have higher numerical values for tensile strength and elongation, the articles are evaluated to have excellent dip quality. The evaluation results of the mechanical properties of each specimen are shown in the following Table 1.

**[Table 1]**

| | Polyol Content (parts by weight) | 300% Modulus (MPa) | Tensile Strength (MPa) | Elongation (%) |
|---|---|---|---|---|
| Comparative Example 1 | 0 | 6.5 | 39.8 | 530 |
| Example 1-1 | 0.5 | 6.2 | 38.5 | 510 |
| Example 1-2 | 1.0 | 5.8 | 40.2 | 530 |
| Example 1-3 | 3.0 | 6.1 | 40.5 | 515 |
| Example 1-4 | 5.0 | 5.6 | 36.4 | 490 |
| Example 1-5 | 10.0 | 4.7 | 22.4 | 452 |
| Example 2-1 | 0.5 | 5.8 | 38.2 | 520 |
| Example 2-2 | 1.0 | 6.3 | 41.5 | 543 |
| Example 2-3 | 3.0 | 6.4 | 39.9 | 534 |
| Example 2-4 | 5.0 | 6.0 | 38.0 | 500 |
| Example 2-5 | 10.0 | 4.8 | 26.2 | 465 |
| Example 3-1 | 0.5 | 6.3 | 35.6 | 515 |
| Example 3-2 | 1.0 | 6.3 | 38.7 | 520 |
| Example 3-3 | 3.0 | 6.1 | 42.5 | 525 |
| Example 3-4 | 5.0 | 6.2 | 40.1 | 518 |
| Example 3-5 | 10.0 | 4.7 | 23.1 | 470 |
| Example 4 | 1.0 | 5.9 | 39.2 | 534 |

Referring to Table 1 above, the specimens prepared from the latexes of Examples 1 to 4 using a polyester polyol instead of sulfur maintained the mechanical properties equivalent to those of the specimen prepared from the latex of Comparative Example 1 using sulfur.

### Experimental Example 2: Evaluation of Durability

Specimens were produced by cutting films obtained by dip-forming the latex compositions for dip-forming prepared according to Comparative Example 1 and Examples 1 to 4 into rectangular shapes of 20 mm X 120 mm. The specimens were immersed in artificial sweat (a solution comprising 30 g of sodium chloride, 17 g of ammonium chloride, 10 g of citric acid and 10 g of lactic acid per 1 L of artificial sweat and using a sodium hydroxide solution to adjust a pH to 4.2), to measure the durability of the specimens. Specifically, the upper and lower portions of the specimens were fixed to clamps distanced away from each other by 142 mm, and the upper portions of the specimens were stretched while immersing the lower portions of the specimens to 80 mm in artificial sweat. Then, the specimens were stretched to 192 mm in the longitudinal direction for 8.5 seconds and subjected to continuously repeated elongation and contraction, to measure the time until the specimens were broken. The results thereof are shown in Table 2 below.

**[Table 2]**

| | Durability (min) |
|---|---|
| Comparative Example 1 | 35 |
| Example 1-1 | 42 |
| Example 1-2 | 43 |
| Example 1-3 | 41 |
| Example 1-4 | 40 |
| Example 2-1 | 45 |
| Example 2-2 | 46 |
| Example 2-3 | 44 |
| Example 2-4 | 45 |
| Example 3-2 | 42 |
| Example 4 | 43 |

Referring to Table 2 above, it can be confirmed that the specimens prepared from the latexes of Examples 1 to 4 using a polyester polyol instead of sulfur have excellent durability compared to the specimen prepared from the latex of Comparative Example 1 using sulfur. In particular, it can be confirmed that the latex of Example 2 has an acid value of 2.0 or more for the polyester polyol, which exhibits more improved durability.

### Experimental Example 3: Evaluation of Biodegradability

The latex compositions for dip-forming prepared in Comparative Example 1 and Examples 1 to 4 were formed into specimens having a dumbbell shape according to ASTM D-412. The specimens were buried in natural soil and then stored for one month at room temperature. Thereafter, the physical properties of the specimens were tested according to the method of Experimental Example 1. The results thereof are shown in Table 3 below.

**[Table 3]**

| | Tensile Strength (MPa) | Reduction Rate (%) | Elongation (%) | Reduction Rate (%) |
|---|---|---|---|---|
| Comparative Example 1 | 13.5 | 66 | 530 | 0 |
| Example 1-2 | 7.2 | 82 | 235 | 56 |
| Example 2-2 | 7.5 | 82 | 240 | 56 |
| Example 3-2 | 8.2 | 79 | 220 | 58 |
| Example 4 | 8.1 | 79 | 240 | 55 |

Referring to Table 3 above, it can be confirmed that the specimens prepared from the latexes of Examples 1 to 4 using a polyester polyol instead of sulfur have greatly reduced tensile strength and elongation due to biodegradation, compared to the specimen prepared from the latex of Comparative Example 1 using sulfur.

The foregoing description of the present specification has been presented for illustrative purposes, and it is apparent to a person having ordinary skill in the art that the present specification can be easily modified into other detailed forms without changing the technical idea or essential features of the present specification. Therefore, it should be understood that the forgoing embodiments are by way of example only, and are not intended to limit the present specification. For example, each component which has been described as a unitary part can be implemented as distributed parts. Likewise, each component which has been described as distributed parts can also be implemented as a combined part.

The scope of the present specification is presented by the accompanying claims, and it should be understood that all changes or modifications derived from the definitions and scopes of the claims and their equivalents fall within the scope of the present specification.

## Claims

1. A latex composition for dip-forming, comprising:
a copolymer latex obtained by polymerizing a monomer mixture of a conjugated diene-based monomer, an ethylenically unsaturated nitrile monomer and an ethylenically unsaturated acid monomer; and
a polyester polyol.

2. The latex composition for dip-forming of claim 1, wherein the conjugated diene-based monomer is one selected from the group consisting of 1,3-butadiene, 2,3-dimethyl-1,3-butadiene, 2-ethyl-1,3-butadiene, 1,3-pentadiene, isoprene and combinations of two or more thereof.

3. The latex composition for dip-forming of claim 1 or 2, wherein the ethylenically unsaturated nitrile monomer is one selected from the group consisting of acrylonitrile, methacrylonitrile, fumaronitrile, α-chloronitrile, α-cyanoethylacyrlonitrile and combinations of two or more thereof.

4. The latex composition for dip-forming of one of claims 1 to 3, wherein the ethylenically unsaturated acid monomer is one selected from the group consisting of methacrylic acid, acrylic acid, itaconic acid, maleic acid, fumaric acid, maleic anhydride, citraconic anhydride, styrenesulfonic acid, monobutyl fumarate, monobutyl maleate, mono-2-hydroxypropyl maleate and combinations of two or more thereof.

5. The latex composition for dip-forming of one of claims 1 to 4, wherein the polyester polyol is one selected from the group consisting of a reaction product of a phthalic acid-based compound and a glycol-based compound, a reaction product of a phthalic acid-based compound and a triol-based compound, a reaction product of an adipic acid-based compound and a glycol-based compound, a reaction product of an adipic acid-based compound and a triol-based compound and combinations of two or more thereof.

6. The latex composition for dip-forming of one of claims 1 to 5, wherein the content of the conjugated diene-based monomer is 45 to 80 wt. % based on the total weight of the copolymer latex.

7. The latex composition for dip-forming of one of claims 1 to 6, wherein the content of the ethylenically unsaturated nitrile monomer is 15 to 45 wt. % based on the total weight of the copolymer latex.

8. The latex composition for dip-forming of one of claims 1 to 7, wherein the content of the ethylenically unsaturated acid monomer is 1 to 10 wt. % based on the total weight of the copolymer latex.

9. The latex composition for dip-forming of one of claims 1 to 8, wherein the content of the polyester polyol is 0.1 to 10 parts by weight based on 100 parts by weight of the copolymer latex.

10. The latex composition for dip-forming of claim 1, wherein the acid value of the polyester polyol is 2.0 or more.

11. A method for preparing a dip-formed article, comprising:
(a) preparing a copolymer latex obtained by polymerizing a monomer mixture of a conjugated diene-based monomer, an ethylenically unsaturated nitrile monomer and an ethylenically unsaturated acid monomer;
(b) adding to the copolymer latex a crosslinking composition comprising a polyester polyol; and
(c) performing dip-forming.

12. A dip-formed article prepared by dip-forming the latex composition for dip-forming of any one of claims 1 to 10.

13. The dip-formed article of claim 12, being one selected from the group consisting of gloves for medical use, gloves for agricultural and livestock product processing and gloves for industrial use.
